# EUROPEAN PATENT APPLICATION

(11) **EP 1 248 247 A1**
(43) Date of publication of application: **09.10.2002**
(21) Application number: 02251089.5
(22) Date of filing: 18.02.2002
(51) Int. Cl.: G09B 7/06

(54) **A computer-based system and method for providing multiple choice examination**

(30) Priority: 16.02.2001 GB 0103911
(71) Applicant: Absolutely Training Limited, London EC4V 3NX (GB)
(72) Inventor: Fegan, Paul John, London E4 7AP (GB)
(74) Representative: Reeve, Anna Elizabeth

(57) **Abstract**

A computer-based system for dynamically generating examination questions, the system comprising memory for storing a plurality of questions and, in association with each question, a plurality of right and wrong answers to that question; a processor (16) for selecting a question from the plurality of questions; means for selecting at least one of the right answers and one of the wrong answers associated with the selected one of the questions and means for providing the selected question and answers for display on a screen.

## Description

The present invention relates to a computer-based system and method for delivering multiple choice tests to students. In particular, the present invention relates to an internet-based system and method for delivering such tests.

Many examinations are based on multiple choice, whereby students are presented with a specific question and a plurality of possible answers, some of which are right and some of which are wrong. Students gain marks by correctly selecting the right answer.

At present there are several ways for students to prepare for multiple choice examinations. For example, students can purchase books of multiple choice questions. A disadvantage of this is, however, that the range of questions available in books is limited. Variety can only be achieved by increasing the number of questions available to the students, which involves additional writing to create the questions and the need to print or publish further books of questions. More recently, computer generated examinations have been introduced. These computer-based arrangements include a database of static questions that can be presented to the student. A disadvantage of this is, however, that the database of questions is relatively limited and so the student will eventually see the same question again. This is unhelpful.

An object of the invention is to provide a computer-based system and method for dynamically generating a large number of potential questions from a limited number of variables, thereby increasing the number of questions that can be presented to a student.

According to the present invention, there is provided a computer-based system for dynamically generating examination questions, the system comprising:
a memory for storing a plurality of questions;
a memory for storing in association with each question, a plurality of right and wrong answers to that question;
a processor for selecting a question from the plurality of questions,
a means for selecting at least one of the right answers and one of the wrong answers associated with the selected one of the questions, and
a means for providing the selected question and answers for display on a screen.

An advantage of this system is that multiple choice questions can be dynamically generated from stored information. This would normally take place in real time, although it can be hard programmed into off site systems.
The means for selecting the answers are configured to choose the answers at random. The means for selecting the answers are in place to select more than two wrong answers, for example three or four. The number of answers can be infinite, but in practice will most often be limited to 5/6 answers

Each question can be designed to contain a variable feature and the associated answers can also be designed to be a function of that variable feature. Means may be provided for selecting a value for the variable feature from a pre-determined range, preferably at random, and means may be provided for determining the answers once the variable feature is selected.

According to the present invention, there is provided a computer-based method for dynamically generating examination questions, the method comprising:
storing a plurality of questions in a memory;
storing in memory, in association with each question, a plurality of right and wrong answers to that question;
selecting a question from the plurality of questions;
selecting at least one of the right answers and one of the wrong answers associated with the selected one of the questions, and
presenting the selected question and answers to a user.

The step of selecting may involve randomly selecting the right and wrong answers.

Preferably, the more than two wrong answers are selected, for example three or four.

A system and method in which the invention is embodied will now be described by way of example only and with reference to the accompanying drawings, of which:
Figure 1 is a diagrammatic view of the overall system;
Figure 2 shows an example of the database structure used in the system of Figure 1;
Figure 3 shows another example of the database structure for use in the system of Figure 1;
Figure 4 is a template of a first page of a web site that provides access to the sample exam questions;
Figure 5 is a web page that shows a dynamically generated exam question, and
Figure 6 is the web page of Figure 5 in which a user has selected one of the answers to the exam question.

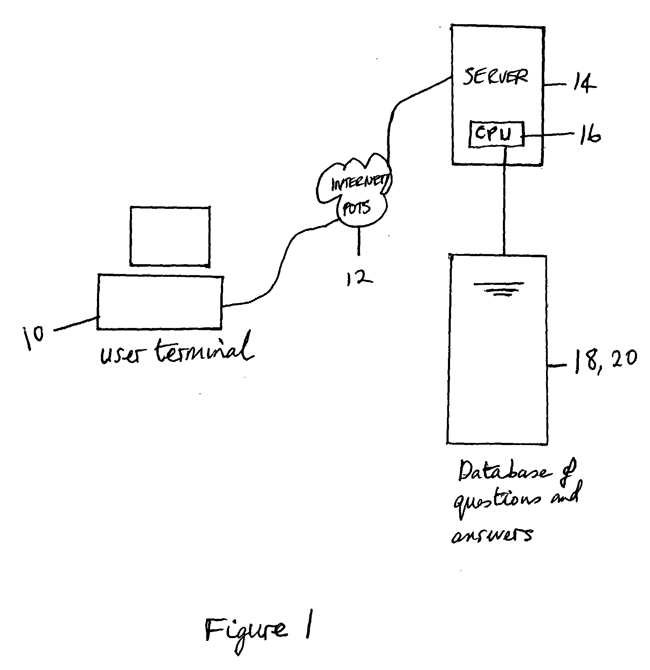

Figure 1 shows a user terminal 10 connected via the internet 12 to a server 14 in which is provided a processor 16 and software for implementing a dynamically generated series of examination questions. Of course, the user terminal could be connected to the processor 16 via any other communications network, such as the plain old telephone system (POTS).Alternatively, the examination question software could be provided in a stand-alone PC.

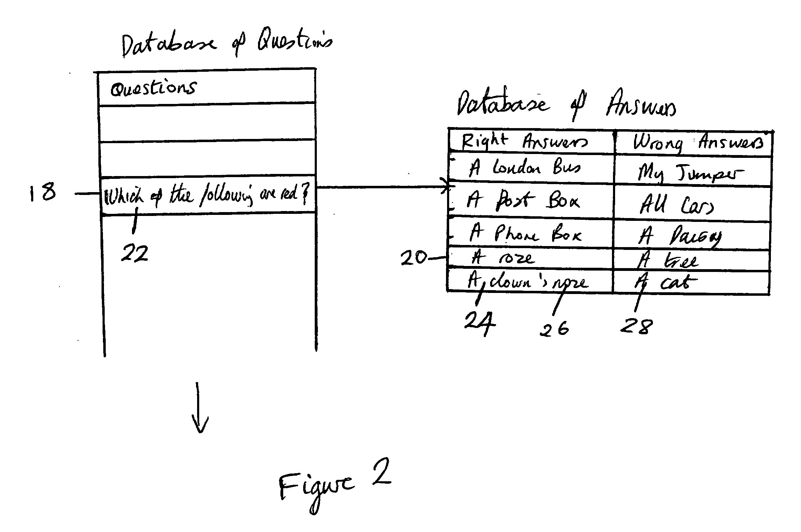

Included in the server 14 is a memory in which is stored a database of questions 18 and a database of answers 20, each entry 22 of the question database being associated with a plurality of entries 24 in the answer database 20. Figure 2 shows a suitable database structure. In this a plurality of questions are provided in the questions database 18. Associated with each question is a separate table or database of answers 20, including a plurality of right answers 26 and a plurality of wrong answers 28. In the example shown in Figure 2, the question is:
Which of the following are red?

In the answer database 20 are provided the following correct answers:
1. A London bus
2. A post box
3. An old fashioned phone box
4. A clown's nose.

Also provided in the database of answers 20 are the following incorrect answers 28:
1. My jumper
2. All cars
3. A daisy
4. A tree
5. A cat.

Software in the processor 16 is operable to select at random one of the correct answers and place it in a random position in a multiple-choice question structure that is prepared for presenting to the user. The wrong answers are randomly drawn from the wrong answer table 28 and placed in the other positions, again at random. In this way the following question could be generated:
Which of the following is red?
A. All cars
B. A London bus
C. A tree
D. A cat

Answer B is correct whilst the other answers are wrong.

There are situations where one of the wrong answers is close to the right answer and as a result confuses the student. This type of wrong answer can be flagged so that it is always included as a "distracter" to the correct answer.

In addition, to providing positively worded questions, the question generator software is adapted to generate a negatively worded question using the database of answers for the corresponding positively worded question. In this case, the right answers for the positively worded question are used as the wrong answers for the negatively worded question and the wrong answers for the positively worded question are used as the right answers for the negatively worded question. In this way, using the same database structure as for the question "Which of the following is red?", the generator is able to generate the following question:
Which of the following is not red?
A. A London bus
B. A post box
C. A daisy
D. A clown's nose

An advantage of this is that the number of questions that can be asked is in effect doubled, without having to double the amount of information stored in the question and answer databases.

The system software is operable to generate another type of question based on a variety of right and wrong answers that have to be analysed. For example:
Which of the following are red?
I. Wrong answer
II. Right answer
III. Wrong answer
IV. Right answer

The answers that can be selected in this case could be as follows:
A. I
B. I, II
C. III, IV
D. II, IV

The correct answer in this case is D.

The question generating software is operable to vary the right and wrong answers in the slots I, II, III, IV. The answers are selected from the answer database and placed randomly. In this case, more than one of the answers presented to the user may be correct. The answers in one of the A, B, C, D slots will be right, the others will be generated and placed randomly. It should be noted that it is also possible to generate a negatively worded question using the same general format from the same information.

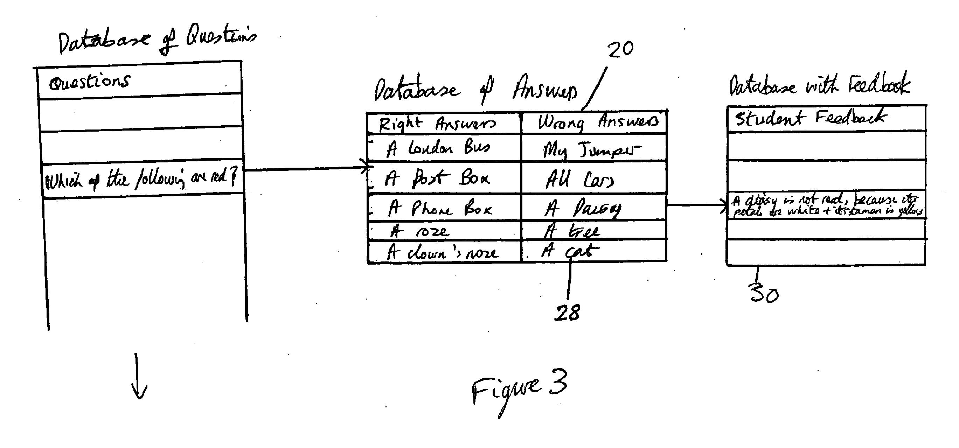

Within the question bank, information may be provided to give feedback for those students who got a question wrong. To do this, a feedback database 30 is provided. Each of the wrong answers 28 in the database of answers 20 is associated with an entry in the feedback database 30. Figure 3 shows an example. In this case, were a student to select the answer "A daisy" to the question "Which of the following are red?" the feedback information provided would be:
"A daisy is not red because the petals are white and the stamen is yellow"

The system software mat also be adapted so that is possible for the student to see feedback on the right answer, if desired, by pressing the correct tab.

In addition to the above format, the question software is operable to generate a number of maths-based questions, where the relationship between several features is constant. In this case, the question typically has a variable feature, such as the cost of an item, and the answers are calculated using a series of fixed relationships or algorithms that are a function of the variable feature. For example, assuming that value added tax (VAT) is set at 17.5%, the following question could be stored in the question database:
If the net cost of an item is X, how much is the VAT?

The answers could be set to have the following pre-determined relationships:
A. 17.5% of X
B. X plus 17.5% of X
C. X divided by 1.175
D. 15% of X.

In this way, once the variable "X" is assigned a value, the software is operable to generate fixed value answers to the question, based on the above pre-determined relationships.

As a specific example, suppose X equals £100. In this case the answers provided to the students would be as follows:
A. £17.50
B. £117.50
C. £14.89
D. £15.

Answer A is, of course, correct. Answer B is incorrect but is credible because it calculates the total cost, ie £100 X 117.5% = £117.50. Answer C is incorrect but assumes that the cost of £100 is inclusive of VAT, ie £100 divided by 1.175 = £85.11 (ie net cost), £100 - £85.11 = £14.89 (the VAT). Answer D is incorrect and calculates VAT at a rate of 15%.

In this case the question would be based on a random figure each time within certain parameters. In the specific example, X is set at £100, but it could be based on any figure between say £10 and £10,000, in £10 increments. The value could be selected at random or alternatively selected according to a pre-determined pattern. In this way, by dynamically varying the numbers that can be entered into the fixed question format, a large number of different questions can be generated.

Another type of question format that the software is able to generate uses data in a table, which data is changeable. In this case, the question bank asks questions derived from information in boxes in the table. For example, the table may contain a calculation of a person's tax liability. The student has to correctly choose the correct personal allowance and the correct tax rates from data also in the table. The system generates the correct answer and also several wrong answers based on common errors. The benefit of this question technique is that the parameters of the question can be readily changed, for example, by changing the income used for the calculation. In this way, a large number of questions can be generated using a single table format question.

From the above it can be seen that a large number of possible questions can be generated from a limited amount of information. This can be done by randomly placing the right and wrong answers in the appropriate places, randomly generating right and wrong answers and varying positively worded questions to be negatively worded. In addition, by using algorithms to randomly select to values for entering into questions, it is possible to generate an infinite number of test questions. This is advantageous.

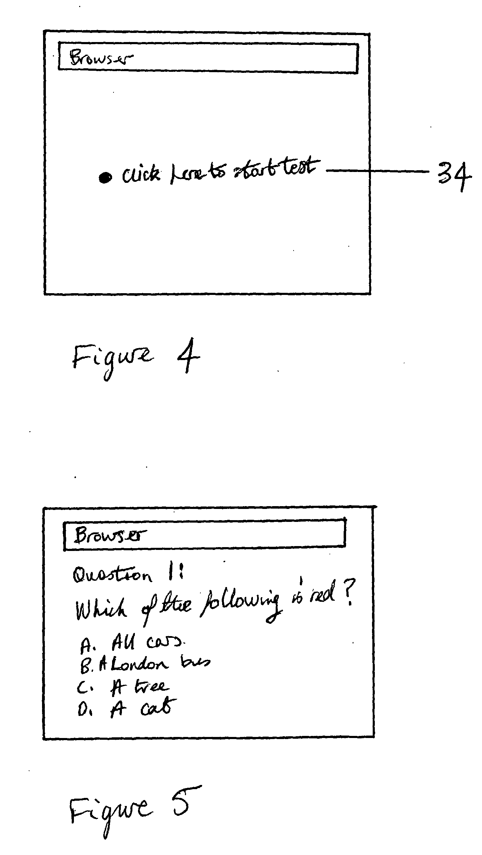

The questions generated by the system are typically accessible for students via a web site. In order to allow students access to the sample examination questions, the web page includes a prompt 34 that instructs the user to, for example, "click here to start test", as shown in Figure 4. The student may then select the number of questions desired. A signal indicative of the number of questions is then sent to the server, together with an instruction to start the test and generate the questions. In response to this, the processor commences generation of sample questions in the manner described above and downloads the questions to the user in real time. This can be done on a question by question basis. Alternatively, all of the questions could be generated, downloaded and cached at the user's terminal, each question then being presented individually on screen.

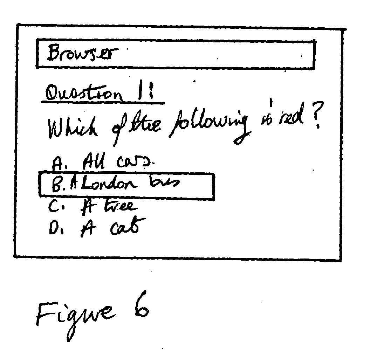

An example of the first question generated is shown in Figure 5. The software is operable to allow selection of one of the answers presented, typically by allowing the user to highlight the desired answer, as shown in Figure 6. Once the answer is selected, a signal indicative of this is sent to the server, where it is noted and compared with the correct answer, which is stored. If the selected answer and the stored answer match, the student is allocated a point. Otherwise, the student receives no marks. Alternatively, the software may be arranged to provide negative marks for incorrect answers. The next question is then generated (or retrieved from the cache in the user's terminal) and presented to the user and the process begins again.

In order to allow students to monitor their progress accurately, they may be given a password associated with a unique identifier, so that every time they log onto the web site the system can identify them. All test results would then be stored in association with the unique identifier, in a format that can be accessed by the student. In this way, the student can see accurately how they are progressing. A further advantage of this is that by storing the student's results over time, the system is able to derive management information as to progress made in the learning process.

As another option, each question may be graded according to its level of difficulty, for example, easy, fair and difficult, and allocated an appropriate marker in the question database. Alternatively, easy questions could be grouped together in a single database and progressively more difficult questions could be grouped together in other databases. In either case, the software is operable to provide students with an option to select the level of difficulty required at the start of the test. If this is done, when the question databases are interrogated, questions are only chosen from those of the selected difficulty. In this way, at the start of exam preparation, students can opt to try out relatively easy questions and as their knowledge, understanding and confidence increases they can elect to be tested on more challenging matters.

Using the system and method described above provides a highly flexible way for dynamically delivering a large number of questions to students from a limited amount of information. This is advantageous.

A skilled person will appreciate that variations of the disclosed arrangements are possible without departing from the invention. Accordingly, the above description of a specific embodiment is made by way of example and not for the purposes of limitation. It will be clear to the skilled person that minor modifications can be made without significant changes to the operation described above.

## Claims

1. A computer-based system for dynamically generating examination questions, the system comprising:
a memory for storing a plurality of questions;
a memory for storing in association with each question, a plurality of right and wrong answers to that question;
a processor for selecting a question from the plurality of questions,
means for selecting at least one of the right answers and one of the wrong answers associated with the selected one of the questions, and
means for providing the selected question and answers for display on a screen.

2. A system as claimed in claim 1, wherein the means for selecting the answers are operable to do so at random.

3. A system as claimed in claim 1 or claim 2, wherein the means for selecting the answers are operable to select more than two wrong answers, for example three or four.

4. A system as claimed in any one of the preceding claims, wherein the or each question has a variable feature and the associated answers are a function of that variable feature.

5. A system as claimed in claim 4, wherein means are provided for selecting a value for the variable feature from a pre-determined range, preferably at random, and means are provided for determining the answers once the variable feature is selected.

6. A computer-based method for dynamically generating examination questions, the method comprising:
storing a plurality of questions in a memory;
storing in memory, in association with each question, a plurality of right and wrong answers to that question;
selecting a question from the plurality of questions;
selecting at least one of the right answers and one of the wrong answers associated with the selected one of the questions, and
presenting the selected question and answers to a user.

7. A method as claimed in claim 6, wherein the step of selecting involves randomly selecting the right and wrong answers.

8. A method as claimed in claim 6 or claim 7, wherein more than two wrong answers are selected, for example three or four.

9. A method as claimed in claim 6 or claim 7 or claim 8, wherein the or each question are a variable feature and the associated answers are a pre-determined function of that variable feature.

10. A method as claimed in claim 9, involving selecting a value for the variable feature from a pre-determined range, preferably at random, and determining the answers once the variable feature is selected.
